# EUROPÄISCHE PATENTSCHRIFT

(11) **EP 2 454 132 B1**
(45) Veröffentlichungstag und Bekanntmachung des Hinweises auf die Patenterteilung: **10.04.2013**
(21) Anmeldenummer: 11736010.7
(22) Anmeldetag: 23.07.2011
(51) Int. Cl.: B60T 7/12, B60T 13/66, B60W 10/18

(54) **VERFAHREN ZUM STEUERN EINER ANFAHRHILFE EINES KRAFTFAHRZEUGS**
METHOD FOR CONTROLLING A STARTING AID OF A MOTOR VEHICLE
PROCÉDÉ DE COMMANDE D'UNE AIDE AU DÉMARRAGE D'UN VÉHICULE AUTOMOBILE

(30) Priorität: 04.08.2010 DE 102010033416
(43) Veröffentlichungstag der Anmeldung: 23.05.2012
(73) Patentinhaber: Voith Patent GmbH, 89522 Heidenheim (DE)
(72) Erfinder: DIETZEL, Bernd, 89428 Syrgenstein (DE); STARK, Uli, 89547 Gerstetten (DE); VOGEL, Hans, 89518 Heidenheim (DE)
(74) Vertreter: Dr. Weitzel & Partner
(86) Internationale Anmeldenummer: PCT/EP2011/003701
(87) Internationale Veröffentlichungsnummer: WO 2012/016648

(56) Entgegenhaltungen:
- WO-A1-2010/015762
- DE-A1-102008 026 530
- US-A1- 2007 233 351

## Beschreibung

Die vorliegende Erfindung betrifft ein Verfahren zum Steuern einer Anfahrhilfe eines Kraftfahrzeugs, insbesondere eines Busses, im Einzelnen gemäß den Merkmalen des Oberbegriffs von Anspruch 1.

Es sind zahlreiche Verfahren zum Steuern einer Anfahrhilfe eines Kraftfahrzeugs bekannt, welche sich insbesondere, wie die vorliegende Erfindung, mit der Beendigung oder dem Lösen der Anfahrhilfe durch Vermindern des Bremsdruckes bei einem Anfahrvorgang befassen. So soll nämlich das Lösen der Anfahrhilfe derart erfolgen, dass ein Rückrollen des Kraftfahrzeugs an einer Steigung sicher vermieden wird. Das ist deswegen schwierig, weil sich das Hangabtriebsmoment, welches auf das Kraftfahrzeug im Sinne eines Rückrollens wirkt, mit dem Winkel der Steigung und dem Gewicht des Kraftfahrzeugs durch unterschiedliche Beladungszustände verändert. Eine einfache Lösung dieses Problems kann dadurch erreicht werden, dass das Lösen der Anfahrhilfe, das heißt der Abbau des Bremsdruckes derart langsam erfolgt, dass im ungünstigsten Fall, das heißt bei maximaler Beladung des Kraftfahrzeugs und bei maximaler Steigung, ein Rückrollen verhindert wird. Der Abbau des Bremsmomentes kann dabei in Abhängigkeit des Antriebsmomentes des Antriebsmotors erfolgen.

Nachteilig an einem solchen einfachen Verfahren ist jedoch, dass das Lösen der Anfahrhilfe beziehungsweise das Vermindern des Bremsdruckes auch dann entsprechend langsam erfolgt, wenn gar keine Rückrollgefahr droht, beispielsweise beim Anfahren in der Ebene oder bei einer Rückwärtssteigung. Hier empfindet der Fahrer des Kraftfahrzeugs das verzögerte Anfahren als Komfortverlust, da das Fahrzeug "klebt". Außerdem wird der Kraftstoffverbrauch unnötig erhöht.

Um den Abbau des Bremsdruckes entsprechend der bei einem Anfahrvorgang tatsächlich vorherrschenden Steigung vorzunehmen, sehen die meisten bekannten Steuerungsverfahren vor, die Steigung durch Erfassen des Neigungswinkels zu ermitteln und den Abbau des Bremsdruckes in Abhängigkeit der erfassten Steigung auszuführen. Eine solche Neigungswinkel- oder Steigungserfassung wird beispielsweise in den Druckschriften DE 103 03 415 A1, DE 101 03 713 A1, DE 199 12 878 A1, DE 36 18 532 A1, EP 0 812 747 A2 und DE 196 30 870 A1 beschrieben und WO 2010/015762 A1 beschreibt ein weiteres Verfahren zum Lösen der Bremse einer Anfahrhilfe eines Fahrzeugs. Im Einzelnen werden dort in Abhängigkeit des erfassten Neigungswinkels verschiedene zeitliche Verläufe des Abbaus des Bremsmomentes vorgesehen. Ferner schlägt das Dokument DE 36 18 532 A1 vor, an einem verdrehbaren Teil einer Bremse einen Schalter vorzusehen, dessen Schaltzustand sich in Abhängigkeit von Zuständen der Fahrbahn, namentlich Steigung vorwärts - eben - Steigung rückwärts, ändert. Es wird ermittelt, ob sich der Schaltzustand des Schalters geändert hat und erst dann ein Abschaltsignal für die Anfahrhilfe erzeugt, wenn sich der Schaltzustand wie gewünscht geändert hat. Obwohl dieses Verfahren eine vergleichsweise hohe Sicherheit gegen Rückrollen bietet, ist der Fahrkomfort dadurch gemindert, dass das Kraftfahrzeug grundsätzlich beim Anfahrvorgang auf der Straße "klebt", nämlich solange die Änderung des Schaltzustands des Schalters noch nicht eingetreten ist. Diesem Kleben schließt sich aufgrund des schon vergleichsweise hohen Antriebsmoments bei der Zustandsänderung des Schalters ein ruckartiges Anfahren an. Ferner ist der konstruktive Aufwand hoch und das System aufgrund des mechanischen Schalters fehleranfällig. Ein Ausfall des Schalters macht das Fahrzeug fahrtuntüchtig, oder, wenn für den Störfall eine Umgehung des Schalters vorgesehen ist, steht keinerlei Anfahrhilfe mehr zur Verfügung.

Der vorliegenden Erfindung liegt die Aufgabe zugrunde, ein Verfahren zum Steuern einer Anfahrhilfe eines Kraftfahrzeugs, insbesondere eines Busses, anzugeben, mit welchem ein Rückrollen des Fahrzeugs sicher in einem zulässigen Bereich gehalten wird, der Fahrkomfort erhöht wird und auch bei einer Störung eine Anfahrhilfe weiterhin zur Verfügung gestellt werden kann. Das Verfahren soll sich durch eine leichte Implementierbarkeit im Kraftfahrzeug und eine hohe Betriebssicherheit auszeichnen.

Die erfindungsgemäße Aufgabe wird durch ein Verfahren mit den Merkmalen von Anspruch 1 gelöst. In den abhängigen Ansprüchen sind vorteilhafte und besonders zweckmäßige Ausgestaltungen der Erfindung angegeben.

Das erfindungsgemäße Verfahren sieht vor, dass bei aktiver Anfahrhilfe zunächst das Kraftfahrzeug mittels Bremskraft durch Aufbringen eines Bremsdruckes auf eine Bremse der Anfahrhilfe gehalten wird. Eine solche Aktivierung der Anfahrhilfe beziehungsweise vollständiges Halten des Kraftfahrzeugs kann beispielsweise immer dann ausgelöst werden, wenn der Fahrer das Kraftfahrzeug auf die Geschwindigkeit Null abgebremst hat, insbesondere mittels einer fußpedalbetätigten Betriebsbremse, unabhängig davon, ob er das Bremspedal im Anschluss loslässt beziehungsweise die Betriebsbremse löst. Ein Lösen der Anfahrhilfe durch Vermindern des Bremsdruckes kann dann in Reaktion auf die Erfassung eines durch den Fahrer initiierten Anfahrvorgang erfolgen, beispielsweise wenn der Fahrer das Gaspedal betätigt.

Erfindungsgemäß erfolgt das Lösen der Anfahrhilfe wie folgt: Der Bremsdruck wird gemäß einem vorgegebenen ersten Gradienten vermindert. Diese Verminderung setzt insbesondere sofort nach der Initiierung des Anfahrvorgangs des Fahrers, insbesondere nach der Betätigung des Gaspedals ein.

Gleichzeitig wird die Drehrichtung einer Abtriebswelle eines Getriebes des Kraftfahrzeugs oder eines anderen in Abhängigkeit der Drehzahl der Antriebsräder des Kraftfahrzeugs umlaufenden Bauteils erfasst beziehungsweise eine solche Erfassung initiiert. Sobald das Ergebnis der Drehrichtungserfassung vorliegt, insbesondere nach Ablauf einer Zeitspanne nach dem Start der Verminderung des Bremsdruckes gemäß dem vorgegebenen ersten Gradienten, wird dieses ausgewertet und, wenn ein Drehrichtungssignal erfasst wurde, das eine Vorwärtsfahrt des Kraftfahrzeugs anzeigt, wird die Verminderung des Bremsdruckes gemäß dem vorgegebenen ersten Gradienten fortgesetzt. Wenn hingegen ein anderes Signal als ein Drehrichtungssignal, das eine Vorwärtsfahrt des Kraftfahrzeugs anzeigt, erfasst wurde, so wird die Verminderung des Bremsdruckes mit einem zweiten, gegenüber dem ersten Gradienten verminderten Gradienten fortgesetzt oder der Bremsdruck erhöht. Im letzteren Fall kann dann entweder das Lösen der Anfahrhilfe gemäß den zuvor aufgezeigten Schritten erneut gestartet werden oder der Bremsdruck zunächst erhöht werden und anschließend gemäß einem vom erste Gradienten abweichenden Gradienten, insbesondere gegenüber dem ersten Gradienten verminderten Gradienten vermindert werden.

Gemäß einer Ausführungsform des erfindungsgemäßen Verfahrens erfolgt die Verminderung des Bremsdruckes gemäß dem ersten Gradienten linear über der Zeit. Ferner kann gemäß einer Ausführungsform die Verminderung des Bremsdruckes gemäß dem zweiten Gradienten nicht linear oder auch linear jedoch weniger steil erfolgen.

Die Erfassung der Drehrichtung kann mittels eines Sensors erfolgen, insbesondere Hallsensors, der beispielsweise als differenzieller Hallsensor ausgeführt sein kann, dessen Ausgangssignale Informationen über die Drehzahl und über die Drehrichtung enthalten. Beispielsweise kann die Frequenz der Ausgangspulse des Sensors die sensierte Drehzahl beschreiben. Die Länge der Pulse kann Auskunft darüber geben, ob ein reines Geschwindigkeitssignal, das Drehrichtungssignal "links" oder das Drehrichtungssignal "rechts" vorliegt, wobei entsprechend eines der beiden Drehrichtungssignale der Vorwärtsfahrt und das andere der beiden Drehrichtungssignale der Rückwärtsfahrt zugeordnet wird. Günstig ist es, wenn die Länge der Pulse, die eine Rückwärtsfahrt des Kraftfahrzeugs anzeigen, kürzer ist als die Länge der Pulse, die eine Vorwärtsfahrt des Kraftfahrzeugs anzeigen. So ist es nämlich vorstellbar, dass durch Alterungserscheinungen die Sensorimpulse verkürzt werden können. Durch die zuvor genannte Auswahl wird sichergestellt, dass im Fehlerfall (Verkürzung eines Pulses) die sicherere Verminderung des Bremsdruckes gemäß dem vergleichsweise verminderten Gradienten ausgeführt wird beziehungsweise die schnelle Verminderung gemäß dem ersten Gradienten nicht ausgeführt beziehungsweise fortgesetzt wird.

Der Sensor zur Erfassung der Drehrichtung kann derart ausgeführt sein, dass er nach dem Übergang Stillstand-Drehung als ersten Puls ein reines Geschwindigkeitssignal liefert. Dieser Puls sowie der nächste Puls mit Drehrichtungsinformation können insbesondere in einem unkalibrierten Modus erzeugt werden, wodurch die Drehrichtungsinformation erst beim dritten Puls korrekt ist. Somit ergibt sich bezüglich der Drehrichtung zunächst eine Totphase beim Erfassen der Drehrichtung, innerhalb von welcher der Bremsdruck gemäß dem vorgegebenen ersten Gradienten vermindert wird. Die Länge der Totphase und die Wahl des ersten Gradienten bestimmen die maximal mögliche Rückrollstrecke des Kraftfahrzeugs, die im zulässigen Bereich liegen soll.

Das vom Sensor möglicherweise erzeugte andere Signal, das heißt das Signal, das anliegt, wenn kein Drehzahlsignal anliegt, das eine Vorwärtsfahrt des Kraftfahrzeugs anzeigt, kann beispielsweise ein Drehrichtungssignal, das eine Rückwärtsfahrt des Kraftfahrzeugs anzeigt, ein Drehrichtungssignal, das einen Stillstand des Kraftfahrzeugs anzeigt, und/oder ein reines Drehzahlsignal sein. Ferner ist es möglich, eine Timeout-Überwachung vorzusehen, das heißt zu prüfen, ob nach Ablauf einer vorgegebenen Zeitspanne nach Beginn der Verminderung des Bremsdruckes (immer noch) kein Signal anliegt und in diesem Fall die Verminderung des Bremsdruckes gemäß dem zweiten Gradienten zu verzögern oder gemäß einer höheren Druckrampe fortzusetzen.

Eine erfindungsgemäße Ausführungsform sieht vor, dass auch nach dem Erfassen des Drehzahlsignals, das eine Vorwärtsfahrt des Kraftfahrzeugs anzeigt, die Drehrichtung weiter erfasst wird und bei einer nachfolgenden Erfassung eines Signals, das eine Rückwärtsfahrt des Kraftfahrzeugs anzeigt, der Bremsdruck vergrößert oder die Verminderung gemäß dem zweiten oder gemäß einem dritten Gradienten, der gegenüber dem zweiten Gradienten vermindert ist, fortgesetzt wird. Beispielsweise kann dann auch der Bremsdruck zunächst sprungartig vergrößert werden und anschließend ausgehend von dem vergrößerten Wert gemäß einem Gradienten vermindert werden, wobei dieser Gradient insbesondere dem ersten, zweiten oder dritten Gradienten entspricht.

Von Vorteil ist es, wenn das erfindungsgemäße Verfahren zwei Betriebsmodi aufweist, nämlich einen Sicherheitsmodus und einen Komfortmodus. Im Komfortmodus wird die Verminderung des Bremsdruckes gemäß dem vorgegebenen ersten Gradienten beim Lösen der Anfahrhilfe, insbesondere unmittelbar nach der Erfassung der Initiierung des Anfahrvorganges, ausgeführt, zusammen mit dem Erfassen beziehungsweise dem Start der Erfassung der Drehrichtung der Abtriebswelle beziehungsweise des anderen in Abhängigkeit der Drehzahl der Abtriebsräder umlaufenden Bauteils. Im Sicherheitsmodus wird das Lösen der Anfahrhilfe, insbesondere sofort nach der Erfassung des initiierten Anfahrvorganges, durch Vermindern des Bremsdruckes gemäß dem vorgegebenen zweiten Gradienten oder einem anderen gegenüber dem ersten Gradienten verminderten Gradienten ausgeführt. Dabei kann gemäß einer Ausführungsform vorgesehen sein, dass erst dann in den Komfortmodus geschaltet wird, wenn die Plausibilität der vom Sensor ausgegebenen Signale geprüft wurde. Ein Umschalten in den Sicherheitsmodus kann beispielsweise dann vorgesehen werden, wenn die Plausibilitätsprüfung zu einem negativen Ergebnis geführt hat oder bei einer erfassten Störung oder einem Ausfall des Sensors oder einer sonstigen Störung der Erfassung.

Die Plausibilitätsprüfung der vom Sensor ausgegebenen Signale kann beispielsweise dadurch erfolgen, dass bei der Verzögerung des Kraftfahrzeugs vor dem oder bis zum Halten des Kraftfahrzeugs mittels Bremskraft durch Aufbringen des Bremsdruckes die vom Sensor ausgegebenen Signale auf Vorliegen von Drehrichtungssignalen geprüft werden, die eine Vorwärtsfahrt des Kraftfahrzeugs anzeigen, und die Verminderung des Bremsdruckes gemäß dem ersten Gradienten beim Lösen der Anfahrhilfe, das heißt das Umschalten in den Komfortmodus, nur dann erfolgt, wenn Drehrichtungssignale bei der Verzögerung erfasst wurden, die eine Vorwärtsfahrt anzeigen, und anderenfalls die Verminderung des Bremsdruckes beim Lösen der Anfahrhilfe von Anfang an gemäß dem zweiten oder einem anderen gegenüber dem ersten Gradienten verminderten Gradienten erfolgt, das heißt in den Sicherheitsmodus geschaltet wird. Ein Verzögern beziehungsweise Anhalten des Kraftfahrzeugs kann beispielsweise durch die Abfolge der Gänge eines Schaltgetriebes im Kraftfahrzeugantriebsstrang, wobei unter Schaltgetriebe auch Automatgetriebe oder automatisierte Schaltgetriebe verstanden werden, erfasst werden, beispielsweise an der Abfolge zweiter Gang, erster Gang, Stillstand oder auch nur erster Gang, Stillstand. Nur wenn bei dieser Abfolge der Sensor korrekte "Vorwärts"-Pulse liefert, wird beim anschließenden Anfahren die Komfortfunktion benutzt beziehungsweise in den Komfortmodus geschaltet.

Wenn der Sensor ein Signal liefert, bei welchem die Frequenz der Pulse die Drehzahl angibt, so kann beim Anfahrvorgang die erfasste Drehzahl mit einem Grenzwert verglichen werden und bei einer Überschreitung des Grenzwertes entweder auf eine Fehlfunktion geschlossen werden, mit der Maßgabe, die Verminderung des Bremsdruckes zu verlangsamen oder den Bremsdruck, wie dargelegt, zu erhöhen oder mit der Maßgabe, in den Sicherheitsmodus umzuschalten. Wenn hingegen feststeht, dass ein korrektes Signal ausgegeben wurde, so kann aufgrund der hohen Drehzahl die Anfahrhilfe ausgeschaltet werden.

Gemäß einer Ausführungsform wird vorgesehen, die Plausibilität der vom Sensor ausgegebenen Signale dadurch zu prüfen, dass die ermittelte Drehzahl mit der mittels eines anderen Sensors erfassten oder berechneten Motordrehzahl, die in der Regel auf dem CAN-Bus abrufbar ist, verglichen wird, gegebenenfalls unter Berücksichtigung des eingelegten Ganges im Fahrzeuggetriebe.

Wenn neben dem Drehrichtungssignal ein Drehzahlsignal erfasst wird, insbesondere mittels dem oben genannten Sensor, so kann die Drehzahl gemäß einer Ausführungsform der Erfindung ausgewertet werden und der Bremsdruck in Abhängigkeit der erfassten Drehzahl verändert, bei erfasster Vorwärtsfahrt insbesondere vermindert werden. Wenn das Drehrichtungssignal hingegen eine Rückwärtsfahrt des Kraftfahrzeugs anzeigt, so kann insbesondere der Bremsdruck in Abhängigkeit der erfassten Drehzahl vergrößert oder der Gradient der Verminderung in Abhängigkeit der erfassten Drehzahl reduziert werden.

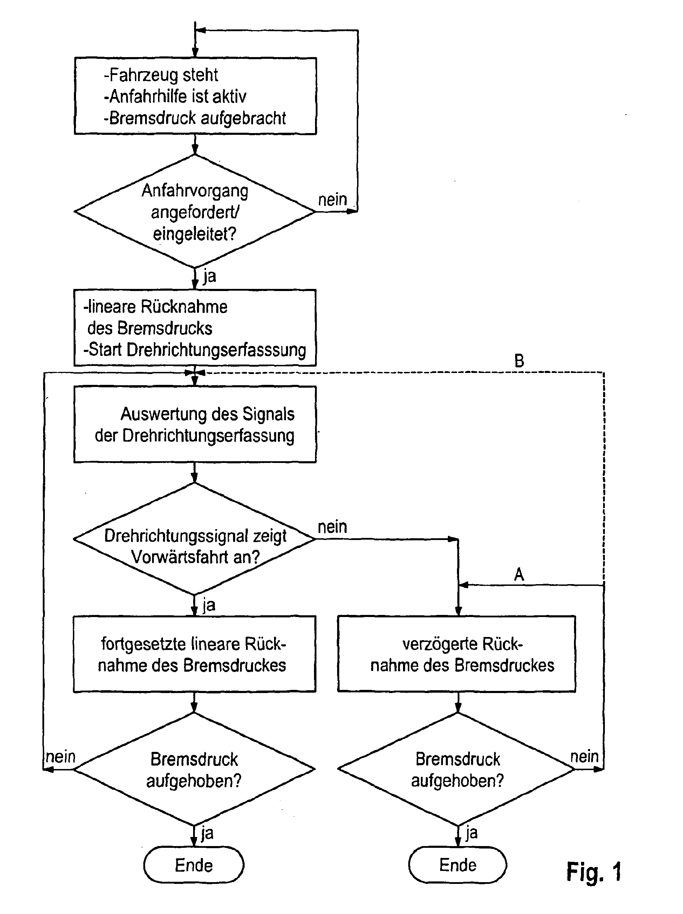

Die Erfindung soll nachfolgend anhand eines Ausführungsbeispiels und der Figur 1 exemplarisch beschrieben werden.

In der Figur 1 ist ein Flussdiagramm dargestellt, welches die wesentlichen Schritte einer Ausführungsform der Erfindung darstellt. Das Verfahren geht dabei von dem Zustand aus, dass das Fahrzeug steht, die Anfahrhilfe aktiv ist und Bremsdruck aufgebracht ist, insbesondere der maximale Bremsdruck. Nun wird geprüft, ob ein Anfahrvorgang angefordert beziehungsweise eingeleitet wurde. Wenn nein, wird der Bremsdruck nicht vermindert, sondern weiter aufrechterhalten. Wenn ja, wird mit einer linearen Rücknahme des Bremsdruckes begonnen und die Drehrichtungserfassung gestartet.

Nach Ablauf einer vorgegebenen Zeitspanne, insbesondere nach einer vorbestimmten Anzahl von durch den Sensor, welcher die Drehrichtung erfasst, ausgegebenen Pulse, beispielsweise ab dem dritten Puls, erfolgt die Auswertung des Signals der Drehrichtungserfassung beziehungsweise des Sensors. Wenn das Drehrichtungssignal eine Vorwärtsfahrt anzeigt, erfolgt eine fortgesetzte lineare Rücknahme des Bremsdruckes. Wenn hingegen ein Drehrichtungssignal, das eine Vorwärtsfahrt anzeigt, nicht erfasst wurde, wird die Rücknahme des Bremsdruckes verzögert weitergeführt.

Auch bei fortgesetzter linearer Rücknahme des Bremsdruckes erfolgt eine weitere Erfassung und Auswertung der Signale der Drehrichtungserfassung und die lineare Rücknahme wird solange fortgesetzt, wie das Drehrichtungssignal eine Vorwärtsfahrt anzeigt, bis der Bremsdruck vollständig aufgehoben ist. Anschließend kann die Anfahrhilfe deaktiviert werden.

Wenn hingegen eine verzögerte Rücknahme des Bremsdruckes aufgrund der Erfassung eines anderen Signals eingestellt wurde, so kann gemäß einer ersten Ausführung (mit A bezeichnet) die verzögerte Rücknahme des Bremsmomentes insbesondere mit demselben Gradienten weitergeführt werden, bis der Bremsdruck aufgehoben ist, oder gemäß einer zweiten Variante (mit B bezeichnet) erfolgt eine fortgesetzte Auswertung des Signals der Drehrichtungserfassung, und wenn ein Drehrichtungssignal, das eine Vorwärtsfahrt anzeigt, erfasst wurde, wird die Rücknahme des Bremsdruckes linear fortgesetzt, mit den weiteren Schritten, wie sie oben zur linearen Rücknahme des Bremsdruckes beschrieben wurden.

Das erfindungsgemäße Verfahren ermöglicht eine sichere Rückrollverhinderung und zugleich ein komfortables Anfahren, bei einem minimalen konstruktiven beziehungsweise gerätetechnischen Aufwand und einer hohen Ausfallsicherheit. Als Bremse der Anfahrhilfe kann beispielsweise die Betriebsbremse des Fahrzeugs, die sogenannte Haltestellenbremse bei (Linien-)bussen, die gewöhnlich nur auf die Hinterachse wirkt, Lamellenbremsen beziehungsweise Lamellenkupplungen eines Automatgetriebes, welche durch deren geeignete Ansteuerung ein Blockieren beziehungsweise Festhalten des Abtriebs bewirken, verwendet werden.

## Patentansprüche

1. Verfahren zum Steuern einer Anfahrhilfe eines Kraftfahrzeugs, insbesondere eines Busses, mit den folgenden Schritten:
1.1 Halten des Kraftfahrzeugs mittels Bremskraft durch Aufbringen eines Bremsdruckes auf eine Bremse der Anfahrhilfe;
1.2 Lösen der Anfahrhilfe durch Vermindern des Bremsdruckes in Reaktion auf die Erfassung eines durch den Fahrer initiierten Anfahrvorgangs; **dadurch gekennzeichnet, dass**
1.3 das Lösen der Anfahrhilfe wie folgt erfolgt:
1.3.1 Vermindern des Bremsdruckes gemäß einem vorgegebenen ersten Gradienten;
1.3.2 gleichzeitiges Erfassen der Drehrichtung einer Abtriebswelle eines Getriebes des Kraftfahrzeugs oder eines anderen in Abhängigkeit der Drehzahl der Antriebsräder umlaufenden Bauteils;
1.3.3 bei Erfassen eines Drehrichtungssignals, das eine Vorwärtsfahrt des Kraftfahrzeugs anzeigt, Fortsetzen der Verminderung des Bremsdruckes gemäß dem vorgegebenen ersten Gradienten und bei Erfassen eines anderen Signals, Fortsetzen der Verminderung des Bremsdruckes mit einem zweiten gegenüber dem ersten Gradienten verminderten Gradienten oder Erhöhen des Bremsdruckes.

2. Verfahren gemäß Anspruch 1, **dadurch gekennzeichnet, dass** die Verminderung des Bremsdruckes gemäß dem vorgegebenen ersten Gradienten eine lineare Verminderung über der Zeit vorsieht.

3. Verfahren gemäß einem der Ansprüche 1 oder 2, **dadurch gekennzeichnet, dass** die Verminderung des Bremsdruckes mit dem zweiten Gradienten nicht linear oder linear erfolgt.

4. Verfahren gemäß einem der Ansprüche 1 bis 3, **dadurch gekennzeichnet, dass** zum Erfassen der Drehrichtung ein Sensor, insbesondere Hallsensor verwendet wird, der ein Drehrichtungssignal und ein Drehzahlsignal ausgibt.

5. Verfahren gemäß Anspruch 4, **dadurch gekennzeichnet, dass** der Sensor elektrische Pulse ausgibt, wobei die Frequenz der Pulse die Drehzahl und die Länge der Pulse die Drehrichtung anzeigt, wobei die Länge der Pulse, die eine Rückwärtsfahrt des Kraftfahrzeugs anzeigen, insbesondere kürzer als die Länge der Pulse, die eine Vorwärtsfahrt des Kraftfahrzeugs anzeigen, ist.

6. Verfahren gemäß einem der Ansprüche 1 bis 5, **dadurch gekennzeichnet, dass** das andere Signal wenigstens eines, mehrere oder alle der folgenden Signale umfasst:
- ein Drehzahlsignal, das eine Rückwärtsfahrt des Kraftfahrzeugs anzeigt,
- ein Drehzahlsignal, das einen Stillstand des Kraftfahrzeugs anzeigt,
- kein Signal nach Ablauf einer vorgegebenen Zeitspanne nach Beginn der Verminderung des Bremsdruckes,
- ein reines Drehzahlsignal.

7. Verfahren gemäß einem der Ansprüche 1 bis 6, **dadurch gekennzeichnet, dass** nach dem Erfassen des Drehrichtungssignal, das eine Vorwärtsfahrt des Kraftfahrzeugs anzeigt, die Drehrichtung weiter erfasst wird und bei einer nachfolgenden Erfassung eines Signals, das eine Rückwärtsfahrt des Kraftfahrzeugs anzeigt, der Bremsdruck vergrößert oder die Verminderung gemäß dem zweiten oder einem dritten Gradienten, der gegenüber dem zweiten Gradienten vermindert ist, fortgesetzt wird.

8. Verfahren gemäß Anspruch 7, **dadurch gekennzeichnet, dass** bei Erfassen eines Drehzahlsignals, das eine Rückwärtsfahrt des Kraftfahrzeugs anzeigt, nachdem zuvor beim selben Anfahrvorgang ein Drehzahlsignal erfasst wurde, das eine Vorwärtsfahrt des Kraftfahrzeugs anzeigt, der Bremsdruck zunächst sprungartig vergrößert und anschließend ausgehend von dem vergrößerten Wert gemäß einem Gradienten vermindert wird, der insbesondere dem ersten, zweiten oder dritten Gradienten entspricht.

9. Verfahren gemäß einem der Ansprüche 4 bis 8, **dadurch gekennzeichnet, dass** die Plausibilität der vom Sensor ausgegebenen Signale dadurch geprüft wird, dass bei der Verzögerung des Kraftfahrzeugs vor dem oder bis zum Halten des Kraftfahrzeugs mittels Bremskraft durch Aufbringen des Bremsdruckes die vom Sensor ausgegebenen Signale auf Vorliegen von Drehrichtungssignalen geprüften werden, die eine Vorwärtsfahrt des Kraftfahrzeugs anzeigen, und die Verminderung des Bremsdruckes gemäß dem ersten Gradienten beim Lösen der Anfahrhilfe nur dann erfolgt, wenn Drehzahlsignale bei der Verzögerung erfasst wurden, die die Vorwärtsfahrt anzeigten, und anderenfalls die Verminderung des Bremsdruckes beim Lösen der Anfahrhilfe von Anfang an gemäß dem zweiten oder einem anderen gegenüber dem ersten Gradienten verminderten Gradienten erfolgt.

10. Verfahren gemäß einem der Ansprüche 4 bis 9, **dadurch gekennzeichnet, dass**, wenn ein Drehrichtungssignal erfasst wird, das eine Rückwärtsfahrt anzeigt, der Bremsdruck in Abhängigkeit der erfassten Drehzahl vergrößert oder der Gradient der Verminderung in Abhängigkeit der erfassten Drehzahl reduziert wird.

11. Verfahren gemäß einem der Ansprüche 1 bis 10, **dadurch gekennzeichnet, dass** als Bremse die Betriebsbremse des Fahrzeugs, eine Haltestellenbremse bei Ausführen des Fahrzeug als Bus, welche nur auf die Hinterachse wirkt, oder Lamellenbremsen oder Lamellenkupplungen eines Automatgetriebes, mittels welchen der Abtrieb blockiert wird, verwendet wird.

## Claims

1. Method for controlling a starting aid of a motor vehicle, in particular of a bus, with the following steps:
1.1 holding of the motor vehicle by means of a braking force by application of a braking pressure to a brake of the starting aid;
1.2 release of the starting aid by reducing the braking pressure as a reaction to the detection of a starting operation which is initiated by the driver; **characterised in that**
1.3 the release of the starting aid takes place as follows:
1.3.1 reduction of the braking pressure in accordance with a predetermined first gradient;
1.3.2 simultaneous detection of the rotational direction of an output shaft of a transmission of the motor vehicle or of another component which rotates as a function of the rotational speed of the drive wheels;
1.3.3 upon detection of a rotational-direction signal, which indicates forward travel of the motor vehicle, continuation of the reduction of the braking pressure in accordance with the predetermined first gradient and upon detection of another signal, continuation of the reduction in the braking pressure by way of a second gradient which is reduced in comparison with the first gradient or an increase in the braking pressure.

2. Method according to claim 1, **characterised in that** the reduction in the braking pressure in accordance with the predetermined first gradient includes a linear reduction with time.

3. Method according to any of the claims 1 or 2, **characterised in that** the reduction in the braking pressure with the second gradient can be linear or non-linear.

4. Method according to one of the claims 1 to 3, **characterised in that** for detecting the rotational direction a sensor, in particular a Hall sensor is used, which generates a rotational-direction signal and a rotational speed signal.

5. Method according to claim 4, **characterised in that** the sensor generates electrical pulses, whereas the frequency of the pulses indicates the rotational speed and the length of the pulses indicates the rotational direction, whereas the length of the pulses, which indicate backward travel of the motor vehicle, is in particular shorter than the length of the pulses, which indicate forward travel of the motor vehicle.

6. Method according to one of the claims 1 to 5, **characterised in that** the other signal includes at least one, several or all of the following signals:
- a rotational speed signal, which indicates backward travel of the motor vehicle,
- a rotational speed signal, which indicates standstill of the motor vehicle,
- no signal after a preset period of time has elapsed once reduction in the braking pressure has started,
- a pure rotational speed signal.

7. Method according to one of the claims 1 to 6, **characterised in that** after detecting the rotational-direction signal, which indicates forward travel of the motor vehicle, the rotational direction is further detected and with a subsequent detection of a signal, which indicates backward travel of the motor vehicle, the braking pressure is increased or the reduction is continued in accordance with the second or a third gradient, which is reduced with respect to the second gradient.

8. Method according to claim 7, **characterised in that** when detecting a rotational speed signal, which indicates backward travel of the motor vehicle, once a rotational speed signal has been detected previously during the same starting operation, which indicates forward travel of the motor vehicle, the braking pressure is first of all increased abruptly and then is reduced starting from the increased value in accordance with a gradient which in particular corresponds to the first, second or third gradient.

9. Method according to one of the claims 4 to 8, **characterised in that** the signals generated by the sensor are checked for plausibility in such a way that during deceleration of the motor vehicle before or until of stopping said motor vehicle by means of braking force by application of the braking pressure, the signals generated by the sensor are checked for the presence of rotational-direction signals, which indicate forward travel of the motor vehicle, and the reduction in the braking pressure according to the first gradient when releasing the starting aid only takes place if rotation speed signals were detected during said deceleration, which indicated forward travel, and otherwise the reduction in the braking pressure when releasing the starting aid takes place right away in accordance with the second or another gradient which is reduced in comparison with the first gradient.

10. Method according to one of the claims 4 to 9, **characterised in that** when a rotational-direction signal is detected, which indicates backward travel, the braking pressure is increased according to the detected rotational speed or the gradient of the reduction is decreased according to the detected rotational speed.

11. Method according to one of the claims 1 to 10, **characterised in that** the service brake of the vehicle, a frequent stop brake in case when the vehicle is a bus, which only acts upon the rear axle, or multiple disk brakes as well as multiple disk clutches of an automatic transmission, by means of which the power take-off is blocked, can be used as a brake.

## Revendications

1. Procédé de commande d'une aide au démarrage d'un véhicule automobile, en particulier d'un bus, comprenant les étapes suivantes :
1.1 l'arrêt du véhicule automobile au moyen de la force de freinage en exerçant une pression de freinage sur un frein de l'aide au démarrage;
1.2 le déclenchement de l'aide au démarrage par une réduction de la pression de freinage en réponse à la détection d'une opération de démarrage initiée par le conducteur;
**caractérisé en ce que**
1.3 le déclenchement de l'aide au démarrage se déroule comme suit:
1.3.1 la réduction de la pression de freinage selon un premier gradient prédéfini;
1.3.2 la détection simultanée du sens de rotation d'un arbre de sortie de la transmission du véhicule automobile ou d'un autre élément tournant en fonction de la vitesse de rotation des roues motrices;
1.3.3 lors de la détection d'un signal de sens de rotation, indiquant que le véhicule automobile avance, la poursuite de la réduction de la pression de freinage selon le premier gradient prédéfini et lors de la détection d'un autre signal, la poursuite de la réduction de la pression de freinage selon un second gradient réduit par rapport au premier gradient ou l'augmentation de la pression de freinage.

2. Procédé selon la revendication 1, **caractérisé en ce que** la réduction de la pression de freinage selon le premier gradient prédéfini prévoit une réduction linéaire dans le temps.

3. Procédé selon l'une des revendications 1 ou 2, **caractérisé en ce que** la réduction de la pression de freinage s'effectue selon le second gradient de manière non-linéaire ou linéaire.

4. Procédé selon l'une des revendications 1 à 3, **caractérisé en ce que** pour la détection du sens de rotation, on utilise un capteur, en particulier un capteur de Hall, qui produit un signal de sens de rotation et un signal de vitesse de rotation.

5. Procédé selon la revendication 4, **caractérisé en ce que** le capteur produit des impulsions électriques, où la fréquence des impulsions indique la vitesse de rotation et la longueur des impulsions indique le sens de rotation, où la longueur des impulsions, qui affiche une conduite en marche arrière du véhicule automobile, est en particulier plus courte que la longueur des impulsions indiquant que le véhicule automobile avance.

6. Procédé selon l'une des revendications 1 à 5, **caractérisé en ce que** l'autre signal comprend au moins l'un des signaux suivants, plusieurs ou tous :
un signal de vitesse de rotation, qui affiche une conduite en marche arrière du véhicule automobile,
un signal de vitesse de rotation, qui indique un arrêt du véhicule automobile, l'absence de signal après écoulement d'un laps de temps donné après le début de la réduction de la pression de freinage,
un pur signal de vitesse de rotation.

7. Procédé selon l'une des revendications 1 à 6, **caractérisé en ce qu'**après la détection du signal de sens de rotation, indiquant que le véhicule automobile avance, la détecion du sens de rotation continue et lors de la détection suivante d'un signal, qui affiche une conduite en marche arrière du véhicule automobile, la pression de freinage grandit ou l'on poursuit la réduction selon le deuxième ou un troisème gradient, réduit par rapport au deuxième gradient.

8. Procédé selon la revendication 7, **caractérisé en ce que** lors de la détection d'un signal de vitesse de rotation, qui affiche une conduite en marche arrière du véhicule automobile, après détection préalable d'un signal de vitesse de rotation lors du même cycle de démarrage, indiquant que le véhicule automobile avance, la pression de freinage grandit tout d'abord par bonds avant de baisser en partant de la valeur accrue selon un gradient, correspondant en particulier au premier, deuxième ou troisième gradient.

9. Procédé selon l'une des revendications 4 à 8, **caractérisé en ce que** l'on vérifie la plausibilité des signaux produits par le capteur en ce sens que lors de la décélération du véhicule automobile avant ou jusqu'à l'arrêt du véhicule automobile au moyen de la force de freinage en exerçant la pression de freinage, on vérifie la présence de signaux de sens de rotation parmi les signaux produits par le capteur, signaux indiquant que le véhicule automobile avance, et la réduction de la pression de freinage selon le premier gradient lors du déclenchement de l'aide au démarrage ne se produit que si l'on a détecté des signaux de vitesse de rotation lors de la décélération, indiquant une conduite en marche avant, et sinon la réduction de la pression de freinage se déroule lors du déclenchement de l'aide au démarrage dès le début selon le deuxième gradient ou selon un autre gradient réduit par rapport au premier gradient.

10. Procédé selon l'une des revendications 4 à 9, **caractérisé en ce que**, si l'on détecte un signal de sens de rotation, indiquant une conduite en marche arrière, la pression de freinage grandit en fonction de la vitesse de rotation détectée ou le gradient de réduction baisse en fonction de la vitesse de rotation détectée.

11. Procédé selon l'une des revendications 1 à 10, **caractérisé en ce que** l'on utilise comme frein le frein de service du véhicule, un frein d'arrêt en station lorsque le véhicule est un autobus, qui agit uniquement sur l'essieu arrière ou des freins à lamelle ou des embrayages à lamelles d'une transmission automatique, permettant de bloquer la prise de force.
